# EUROPEAN PATENT APPLICATION

(11) **EP 4 560 353 A1**
(43) Date of publication of application: **28.05.2025**
(21) Application number: 24210597.1
(22) Date of filing: 04.11.2024
(51) Int. Cl.: G01S 7/481, F41H 13/00, G01S 7/497, G01S 17/66

(54) **COMBINED HIGH ENERGY LASER AUTO-ALIGNMENT SYSTEM, JITTER CORRECTOR, AND BURN-THROUGH DETECTOR SYSTEM**

(30) Priority: 22.11.2023 US 202318517306
(71) Applicant: Raytheon Company, Tewksbury, MA 01876 (US)
(72) Inventor: LAVINE, Jason R., Tewksbury, 01876 (US); SKOYLES, Liam, Tewksbury, 01876 (US); HOLTEN, Roger, Tewksbury, 01876 (US)
(74) Representative: Dentons UK and Middle East LLP

(57) **Abstract**

A beam director system includes a high-energy laser (HEL) beam source for an HEL beam, a primary mirror disposed along an optical path downstream of the HEL beam source, output optics downstream of the primary mirror, an auto-alignment system associated with the HEL beam source, a jitter correction system downstream of the HEL beam source and upstream of the primary mirror, and a burn-through detector associated with the primary mirror.

## Description

### BACKGROUND OF THE INVENTION

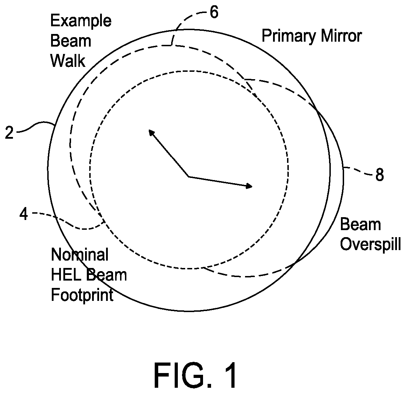

High energy laser (HEL) systems, in error states, can have excessive beam walk through the laser system that can damage hardware, affect personnel safety, and effect boresight of the system. HEL systems may be configured to have a redundant sensing mechanism for beam walk, outside of auto-alignment tracking software, when applicable based on the system architecture. This is normally done at the primary mirror of the system. FIG. 1 illustrates a primary mirror 2 showing a normal (centered) HEL beam footprint noted by dashed lines 4, an example of beam walk noted by dashed line 6, and an example of beam overspill noted by dashed line 8.

### SUMMARY OF INVENTION

One aspect of the present disclosure is directed to a beam director system comprising a high-energy laser (HEL) beam source for an HEL beam, a primary mirror disposed along an optical path downstream of the HEL beam source, output optics downstream of the primary mirror, an auto-alignment system associated with the HEL beam source, a jitter correction system downstream of the HEL beam source and upstream of the primary mirror, and a burn-through detector associated with the primary mirror.

Embodiments of the beam director system further may include configuring the HEL beam source to include an auto-alignment laser, a VIS-NIR fiber circulator, and a reflective collimator. The jitter correction system may be positioned adjacent to a high-speed short wave infrared sensor. The jitter correction system may include a far field position sensitive detector and a near field sensing array. The burn-through detector may be disposed along a burn-through path. The burn-through path may include at least one attenuator and a photo diode. The burn-through detector may be configured to work at a test power level, intermediate ramp power levels, and at full power. A dynamic range of the photodiode may be set by either the input power or the resistive load in the readout electronics. The burn-through detector may be configured with a bit depth photodiode output having sufficient depth/dynamic range without attenuation. The burn-through detector may include one or more burn strips surrounding a periphery of the primary mirror. The HEL beam source also may emit an auto-alignment beam that is co-aligned with the HEL beam. The beam director system further may include a beamsplitter configured to direct light to the jitter correction system and a retroreflector associated with the primary mirror, with the retroreflector directing part of the auto-alignment back to one or more track sensors. The beam director system further may include a beam correction system, a beam pickoff system, a high-speed track sensor, a beam correction sensor, and/or a high-speed track correction system.

Another aspect of the present disclosure is directed to a method of operating a high-energy laser (HEL) weapon. In one embodiment, the method comprises: sending an HEL beam of the HEL weapon through optics that are optically downstream of an HEL beam source of the HEL weapon; and correcting the path of the HEL beam that has passed through the optics, using an auto-alignment system associated with the HEL beam source, a jitter correction system downstream of the HEL beam source and upstream of the primary mirror, and a burn-through detector associated with the primary mirror.

Embodiments of the method further may include disposing the burn-through detector is disposed along a burn-through path. The burn-through path may include at least one attenuator and a photo diode. The burn-through detector may be configured to work at a test power level, intermediate ramp power levels, and at full power. A dynamic range of the photodiode may be set by either the input power or the resistive load in the readout electronics. The burn-through detector may be configured with a bit depth photodiode output having sufficient depth/dynamic range without attenuation. Correcting the optics may include changing position of one or more fast steering mirrors of one or more beam correction elements.

### BRIEF DESCRIPTION OF THE DRAWINGS

Various aspects of at least one embodiment are discussed below with reference to the accompanying figures, which are not intended to be drawn to scale. Where technical features in the figures, detailed description or any claim are followed by references signs, the reference signs have been included for the sole purpose of increasing the intelligibility of the figures, detailed description, and claims. Accordingly, neither the reference signs nor their absence is intended to have any limiting effect on the scope of any claim elements. In the figures, each identical or nearly identical component that is illustrated in various figures is represented by a like numeral. For purposes of clarity, not every component may be labeled in every figure. The figures are provided for the purposes of illustration and explanation and are not intended as a definition of the limits of the invention. In the figures:
FIG. 1 is a view of a primary mirror illustrating various laser footprints;
FIG. 2 is a block diagram of a beam director system according to an embodiment of the present disclosure;
FIG. 3 is a schematic view of an optical system having a HEL subsystem and correction systems of an embodiment of the present disclosure;
FIG. 4A is a view of a primary mirror having a laser beam centered on the primary mirror;
FIG. 4B is a view of an optical stimulator showing a burn-through path for the primary mirror shown in FIG. 4A;
FIG. 5A is a view of the primary mirror having the laser beam off-center on the primary mirror;
FIG. 5B is a view of the optical stimulator showing the burn-through path for the primary mirror shown in FIG. 5A;
FIG. 6A is a view of the primary mirror having the high-energy laser beam off-center on the primary mirror;
FIG. 6B is a view of the optical stimulator showing the burn-through path for the primary mirror shown in FIG. 6A;
FIG. 7 is a schematic view of an embodiment of the optical system; and
FIG. 8 is a schematic view of another embodiment of the optical system.

### DETAILED DESCRIPTION OF THE INVENTION

A beam director system for a high-energy laser (HEL) weapon includes correction sensors that are able detect misalignments in optical elements throughout the entire optical path traversed by the high-energy laser. The system includes beam correction sensors that sense misalignments in a first part of the optical path, and high-speed track sensors that sense misalignments in a second part of the optical path, with the first part and the second part overlapping. This allows all optics to be sensed by the beam correction sensors and/or the high-speed track sensors. Any critical optical failure is thus promptly detected. The system can accommodate a wide variety of lasers for the HEL, preferably including a co-boresighted and aligned alignment laser. In addition the system may include provisions that simplify a tracking algorithm, for example by driving a steering mirror or other optical correction device directly from the high-speed track sensor. By having the track sensors further downstream on the optical path than in prior devices, the acquisition and trace sensor fields of view of the system may be improved.

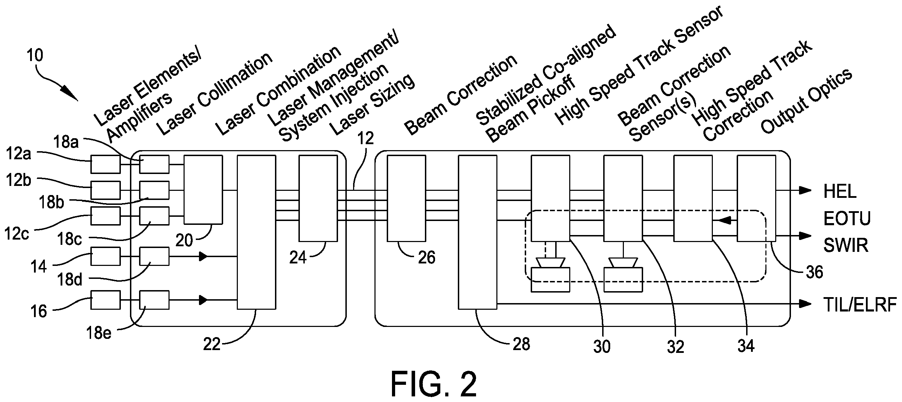

FIG. 2 shows a block diagram of a beam director system 10 for a high-energy laser (HEL) weapon. The system 10 includes a high-energy laser, which generally operates to produce at least one high-energy laser beam. The laser represents any suitable source configured to generate at least one high-energy beam. Any suitable high-energy laser can be used in the system. The beam represents any suitable high-energy laser beam having any suitable cross-sectional size and power level. In general, a "high-energy" beam can represent a beam having about ten kilowatts of power or more.

The system 10 may be configured to include several beams that have different characteristics and are used for different purposes, as explained further below. The beams are passed through optical elements, represented schematically by blocks. The blocks represent any individual or combination of possible optical elements, including reflective elements such as mirrors, transmissive elements such as lenses or filters, beamsplitters, expanders, and/or other optical elements.

A series of light beams (or light from light sources) pass through all or some of the blocks of the beam architecture. The direction of movement through the blocks is described herein as a downstream direction. This is the direction in which beams or other light are processed after being produced within the system 10, and then emitted from the system 10. This downstream direction is the direction that light travels from at least some light sources within the system 10. The opposite direction, in which light entering the system 10 from outside, such as light reflected off of a target, is referred to as the upstream direction.

The light beams include three HEL beams 12a, 12b, 12c, an auto-alignment beam 14, and a target or boresight illuminator beam 16. In the illustrated embodiment, the high-energy laser beams 12a, 12b, 12c, the auto-alignment beam 14, and the target or boresight illuminator beam 16 may be sent from various laser or other light sources, for example including an HEL beam source for the HEL beams.

In the shown embodiment, the high-energy laser beams 12a, 12b, 12c, the auto-alignment beam 14, and the target or boresight illuminator beam 16 are combined at blocks 18a, 18b, 18c, 18d, 18e represent laser collimation, block 20 represents laser combination, block 22 represents laser management/system injection, and block 24 represents laser sizing. In the shown embodiment, the HEL beams 12a, 12b, 12c pass through the laser collimation blocks 18a, 18b, 18c, respectively, the laser combination block 20, the laser management/system injection block 22, and the laser sizing block 24. The auto-alignment beam 14 passes through the laser collimation block 18d, the laser combination block 20, the laser management/system injection block 22, and the laser sizing block 24. The target or boresight illuminator beam 16 passes through the laser collimation block 18e, the laser combination block 20, the laser management/system injection block 22, and the laser sizing block 24. As shown, the arrangement of blocks 18a-18e, 20, 22, 24 may be described as input beam and beam combining section of the system.

Some or all of the beams may be initially misaligned, for example being misaligned angularly and/or spatially. In one embodiment, The beams are passed through a beam direction architecture, which can be configured to include a beam correction block 26, a stabilized, co-aligned beam pickoff block 28, a high-speed track sensor block 30, a beam correction sensor(s) block 32, a high-speed track correction block 34, and an output optics bock 36. The beams first pass through the beam correction block 26, which can be used to correct the misalignment of some or all of the beams 12a, 12b, 12c, 14, 16. For example, the beam correction block 26 may include one or more fast steering mirrors (FSMs) that can be controlled to correct at least some of the misalignment of the beams. In one non-limiting example, the beam correction block 26 may include two FSMs that are able to generate four degrees of freedom, two spatial (translational) and two angular, that are usable in correcting at least some of the misalignment of the beams. Other devices and/or mechanisms for correcting beam misalignment are possible.

The stabilized, co-aligned beam pickoff block 28 represents a location where the target or boresight illuminator beam (or other beam used to meet mission parameters) may be picked off (diverted). This may be an optional feature, and in an alternative embodiment, the pickoff block may be omitted. In a non-limiting example the target or boresight illuminator beam 16 may be used to illuminate the target during firing of the HEL beam (HEL beams 12a, 12b, 12c combined to beam 12), to maintain target acquisition during the laser heating process. The beam may be a lower-power high-divergence target illuminating laser, and target tracking during its use (described below) may be pared down the tracking to only that the wavelength that the beam uses. As shown, the target or boresight illuminator beam is diverted.

The high-speed track sensor block 30 may include any of a variety of cameras or other sensors for target acquisition and tracking. In one embodiment, the high-speed track sensor block 30 may include a 30 Hertz (Hz) camera, for example capable of detecting short-wavelength infrared (SWIR) and/or near infrared (NIR) radiation. Output from the high-speed track sensor block 30 may be used to provide imaging feedback and/or to position the HEL beam on the target.

The beam correction sensor(s) block 32 represents a location where the auto-alignment beam 14 is directed to the beam correction sensor(s). The sensor(s) provide measurements of angular and spatial beam error. Alternatively, the beam may represent part of the HEL laser beam (HEL beam 12) that is sent to the sensor(s) for determining appropriate correction. The auto-correction beam may be intended to be interpreted broadly to include a part of the main HEL beam.

The high-speed track correction block 34 is for high-speed tracking correction, where correction devices, such as fast steering mirrors, are used to correct any deficiencies in the beam error, such as errors introduced by misaligned optical elements. The high-speed track correction block 34 uses as an input data from the sensor(s) and to guide the fast steering mirrors.

The output optics block 36 represents output optics used to deliver high energy laser beam to a target location and to receive a corresponding image of the target and to transmit the image to one or more detectors.

It is an advantage of the system 10 that all of the optics in the blocks are subject to monitoring by the sensor(s) and correction by the correction portions. All of the optical elements are sensed by at least the sensor, or the sensors.

In one embodiment, the tracking sensor may be a SWIR sensor, or other sensor configured to detect an appropriate wavelength or range of wavelengths. The sensor is operatively coupled to the fast steering mirror (FSM) to control the FSM. The beam correction sensor(s) may be part of a laser beam optical positioning system, operatively coupled to FSM for controlling the FSM.

The light source is the source for input beams into the system 10. The beams pass through a first beam correction, then through a coude path before encountering a second beam correction. An aperture sharing element is used to pickoff the beam, which is then sent through pickoff optics. The beams proceed through an internal optical path and to aperture sharing elements. The aperture sharing elements send incoming imaging light to a pair of cameras. The aperture sharing element also directs the auto-alignment beam to beam sensing cameras. The HEL beam passes through the aperture sharing elements to the beam correction, and then through output optics. From there the HEL beam passes out of the system 10.

The various parts of the system 10 may include various types of optical elements. Such optical elements may include combinations of mirrors, beamsplitters, lenses, beam expanders, focusing elements, beam directors, optical scrapers, and switches, to give a non-exhaustive list of possible elements. The system 10 has the advantage that it can be used with any of a variety of high-energy lasers. In general, any HEL that includes a co-boresighted and aligned alignment laser would be suitable for use in the system 10. Another advantage is in the modularity and simplification of the tracking algorithm that is used. There may be a simplified stabilization paradigm used to drive the fast-steering mirror(s) directly from the sensor.

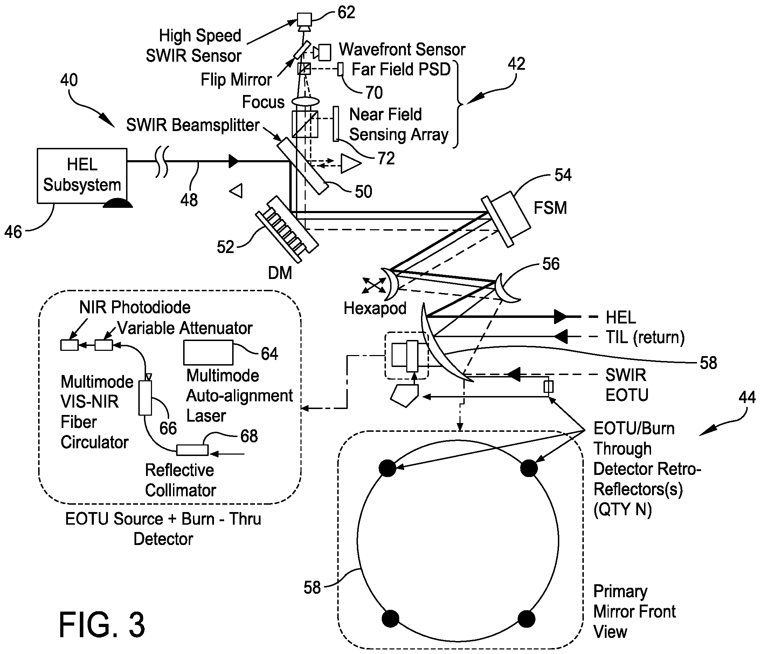

Referring to FIG. 3, embodiments of the present disclosure combine and/or integrate an opto-mechanical auto-alignment system, generally indicated at 40, a jitter correction system, generally indicated at 42, and a burn-through detector, generally indicated at 44, in a low-SWaP (size, weight and power) package. As shown, an HEL subsystem 46 generates a beam 48 directed to a short wave infrared (SWIR) beamsplitter 50, which directs a portion of the beam to a deformable mirror 52. The beam 48 is directed by a fast steering mirror 54 a focus mechanism, e.g., hexapods 56, to a primary mirror 58, which in turn directs the beam to a target through window 60. In one embodiment, the primary mirror 58 may include an injection mirror. As shown, a return image is directed to a high-speed SWIR sensor 62, which is positioned above the beamsplitter 50 in FIG. 3, via a target illumination laser return.

In one embodiment, a rear-facing/gyro-platform-reference laser auto-alignment system 40, which is sometimes referred to as an electro-optical transfer unit (EOTU), includes a transfer function having the picture or video signal as input, and coverts it into the linear light output of the display. As shown, the auto-alignment system 40 includes an auto-alignment laser 64, a VIS-NI R fiber circulator 66, and a reflective collimator 68.

The jitter correction system 42 is positioned adjacent to the high-speed SWI R sensor 62. As shown, in one embodiment, the jitter correction system 42 includes a far field position sensitive detector (PSD) 70 and a near field sensing array 72. As known in optics, jitter is used to refer to motion that has high temporal frequency relative to the integration/exposure time. This may result from vibration in an optical assembly or from the unstable support in the optical assembly.

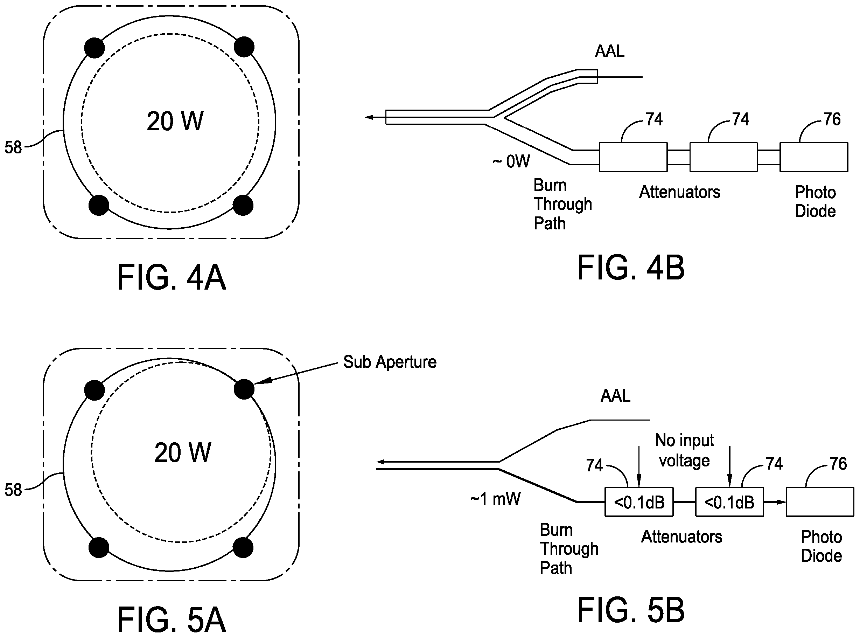

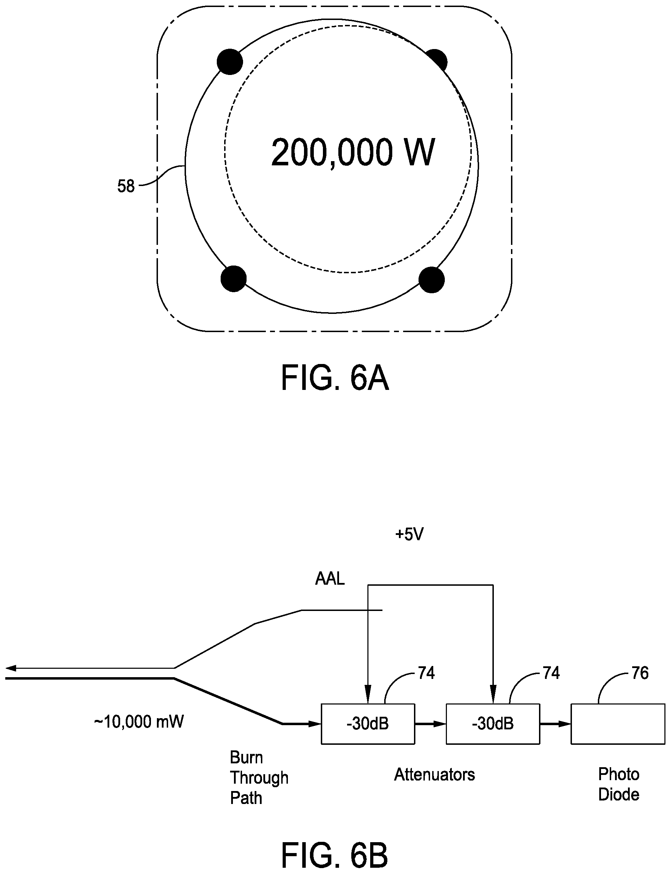

The burn-through detector 44 is located at the primary mirror 58. Referring to FIG. 4A, the primary mirror 58 has, for example, a 20 Watt (W) laser beam centered on the primary mirror. Referring to FIG. 4B, an optical circulator shows a burn-through path for the primary mirror 58 shown in FIG. 4A. As shown, the burn-through path includes two attenuators, each indicated at 74, and a photo diode 76. The burn-through detector 44 is configured to detect the laser beam being off-center on the primary mirror 58. Referring to FIG. 5A, the primary mirror 58 has an example of a 20 W laser (or low power laser) beam off-center on the primary mirror. Referring to FIG. 5B, the photo diode 76 detects a voltage. The system works for high-energy laser beams as well. Referring to FIG. 6A, the primary mirror 58 has a high-energy laser beam, e.g., a 200,000 W laser beam, which is off-center on the primary mirror. Referring to FIG. 6B, the phot diode 76 detects a voltage. That voltage can be attenuated, as shown in this embodiment, through optical attenuators or through use of a photodiode dynamic range.

In one embodiment, with an example of one known method of sensing that the present disclosure improves on, "burn strips" can be positioned around the primary mirror, e.g., primary mirror 58 of the laser system. Each burn strip generally includes a material that, when exposed to laser energy, changes color or is removed to expose a lower material having a different color or brightness. This allows the burn strips to be used to identify that laser energy escaped a laser system. However, burn strips are prone to failure and typically cannot be used to identify where a fault lies within a laser system. Also, burn strips cannot be used to automatically shut down a laser system when there is a fault, so operation of the laser system can continue even after stray laser energy strikes the burn strips.

In another embodiment, with another example of a known method of sensing that the present disclosure improves on, one or more infrared-sensing cameras can be used to sense when laser energy escapes a laser system. However, infrared-sensing cameras can often receive a significant amount of scattered light, which can interfere with proper operation of the infrared-sensing cameras. As a result, infrared-sensing cameras are often prone to generating "false positives," meaning the cameras detect stray laser energy when there is none. Because of this, there often needs to be a human operator monitoring the infrared-sensing cameras in order to verify whether stray laser energy has actually been detected and to shut down a laser system at an appropriate time. This can sometimes result in significant delays between the release of the stray laser energy and shutdown of the laser system, thereby resulting in damage.

In yet another embodiment, with another example of a known method of sensing that the present disclosure improves on, when the HEL beam (or a portion thereof) strikes the burn-through detector, the beam energy can burn through or melt at least one conductive trace of the laser damage detection mechanism. This interrupts or alters an electrical circuit formed using the conductive trace. In some embodiments, while the electrical circuit of a laser damage detection mechanism is intact, the LED indicator can generate illumination, or another indicator or sensing device can generate other feedback. This feedback allows personnel to know that the laser damage detection mechanism has not been damaged by laser energy. Damage from laser energy can break the electrical circuit, causing the illumination or other feedback to stop. The loss of feedback allows the system or operator to know that a fault has occurred and that the laser damage detection mechanism has been damaged by the laser energy. Also, interruption or alteration of the electrical circuit can be quickly detected by a control mechanism for the laser system, which can then shut down the laser system using an appropriate safety interlock. In addition, a bypass mechanism can be used in a damaged detection mechanism to restore current flow through the damaged detection mechanism, which allows other laser damage detection mechanisms coupled in series to continue operation.

Issues with these known approaches are solved by employing one or more laser damage detection mechanisms, e.g., the opto-mechanical auto-alignment system, the jitter correction system, and the burn-through detector, can be used to support the shutdown of a laser system in response to detecting damage caused by stray beam energy. This can occur automatically and in an ultra-fast manner without requiring human intervention. Also, the size and pattern of the conductive traces in the laser damage detection mechanisms can be easily configured to prevent beams of certain diameters from escaping a given volume, which allows for easy tailoring of the laser damage detection mechanisms to support their use with various laser systems. Further, when conductive traces are formed on film or fabric substrates or other thin flexible substrates, the resulting structures are lightweight and easily conformed to match the surfaces of a laboratory, test area, or other area. Moreover, laser damage detection mechanisms implemented in this manner can be quickly and easily manufactured in various shapes and sizes, and they may be easily and cheaply replaced depending on the implementation. In addition, the LED indicators or other indicator or sensing devices can be used to quickly and easily identify where laser energy strikes laser damage detection mechanisms, and diagnostics can be performed to identify the conductive traces that failed for rapid troubleshooting.

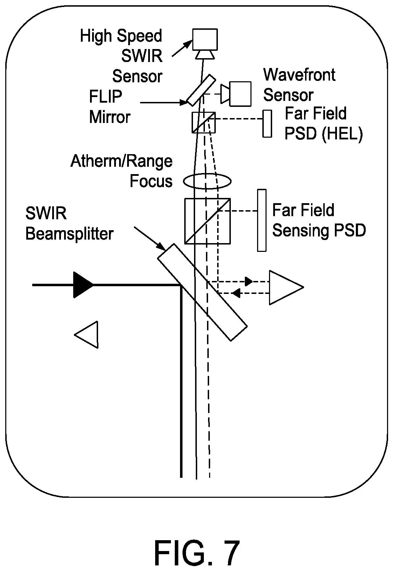

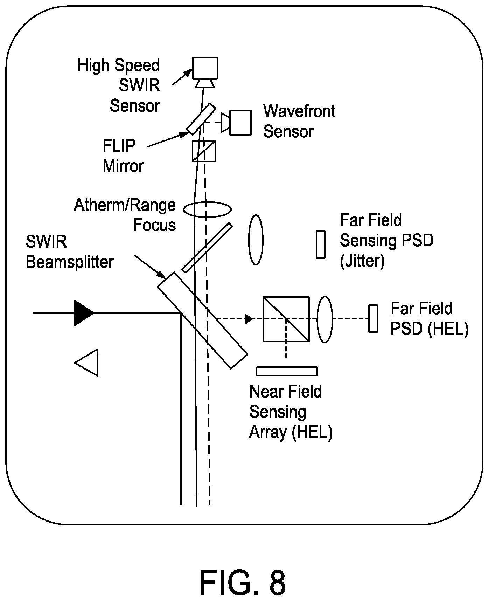

FIG. 7 and FIG. 8 illustrate optical systems of alternative embodiments. FIG. 7 illustrates a compact optical system. FIG. 8 illustrates a functionally separated optical system. Embodiments of the systems and methods disclosed herein may be used in each type of system.

In some embodiments, the HEL is typically contained within a housing. The housing generally encases and protects the components of the laser. The housing also typically includes an opening, window, or other structural feature that allows passage of the beam from the laser out of the housing. The housing can be formed from any suitable material(s) and in any suitable manner. The housing can also have any suitable size, shape, and dimensions.

In some embodiments, a laser controller generally controls the operation of the HEL. For example, the laser controller can control whether the laser is actively generating the beam or is in a standby state ready to generate the beam. The laser controller can also control whether the HEL is generating a continuous beam or an intermittent beam and the power/energy level of the beam. The laser controller includes any suitable structure for controlling operation of a laser. For instance, the laser controller can include one or more processing devices, such as one or more microprocessors, microcontrollers, digital signal processors, field programmable gate arrays, application specific integrated circuits, or discrete logic devices. The laser controller can also include one or more memories configured to store instructions or data used, generated, or collected by the processing device(s). The laser controller can further include one or more interfaces configured to facilitate communications with other components or systems. Note that while the laser controller is shown here as being separate from the HEL, the laser controller can be incorporated into the HEL.

In some embodiments, each laser damage detection mechanism, including the opto-mechanical auto-alignment system, the jitter correction system, and the burn-through detector, also includes at least one LED or other feedback device configured to generate visual feedback or other feedback. The conductive trace(s) of each laser damage detection mechanism can form an electrical circuit with the associated LED(s) or other feedback device(s). If the high-energy beam (or a portion thereof) strikes a laser damage detection mechanism, the energy in the beam can burn through at least one conductive trace of the laser damage detection mechanism, which interrupts or alters an electrical circuit formed using that conductive trace. In some embodiments, when a laser damage detection mechanism is undamaged, its LED or other feedback device generates feedback to indicate no laser damage has occurred. When damage occurs to the conductive trace(s) of a laser damage detection mechanism, its LED or other feedback device stops generating feedback to indicate that laser damage has occurred.

Moreover, control feedback associated with the electrical circuit formed using one or more laser damage detection mechanisms can be provided to the laser controller. For example, a sensor, such as a current sensing or measuring device, can be used to detect a loss of current flowing through the laser damage detection mechanism or to detect a change in the current flowing through the laser damage detection mechanism. If and when damage occurs to a laser damage detection mechanism, the laser controller can detect the interruption or alteration of the current caused by the damage using the control feedback. The laser controller can therefore use this control feedback to determine whether a fault has occurred, automatically shut down the laser using a safety interlock function, trigger an alarm, or perform any other suitable function.

In some embodiments, the laser controller can receive control feedback associated with each individual laser damage detection mechanism. In other embodiments, multiple laser damage detection mechanisms can be coupled together, such as in series, and the laser controller can receive control feedback associated with the group of laser damage detection mechanisms. In particular embodiments, multiple laser damage detection mechanisms can be coupled together in series, and each laser damage detection mechanism can include a bypass mechanism. Each bypass mechanism allows current to flow through a laser damage detection mechanism even when at least one conductive trace of the laser damage detection mechanism has been interrupted. This allows the LED or other feedback device of the damaged detection mechanism to stop working (allowing personnel to identify the damaged detection mechanism) while allowing the current to flow through the other laser damage detection mechanisms. In some embodiments, this also allows the current flowing through the entire collection of laser damage detection mechanisms to be sensed or measured, which allows the laser controller to detect damage to one or more of the laser damage detection mechanisms based on changes in the current.

In some embodiments, each laser damage detection mechanism, including the opto-mechanical auto-alignment system, the jitter correction system, and the burn-through detector, includes any suitable structure containing at least one conductive trace that can be damaged or otherwise interrupted by laser energy. Each conductive trace can be formed from any suitable conductive material(s), such as copper or aluminum. Each conductive trace can also be formed in any suitable manner, such as 3D printing onto a substrate or by depositing conductive material and patterning/etching the conductive material.

In some embodiments, each laser damage detection mechanism, including the opto-mechanical auto-alignment system, the jitter correction system, and the burn-through detector, also includes at least one LED or other feedback device that produces feedback or that does not produce feedback based on whether at least one conductive trace of the laser damage detection mechanism has been damaged. This can occur in the same manner discussed above. Also, control feedback associated with the electrical circuit formed using one or more laser damage detection mechanisms can be provided to the laser controller, and the laser controller uses the control feedback to determine whether a fault has occurred or to automatically shut down the laser using a safety interlock function. Again, this can occur in the same manner discussed above.

In some embodiments, the laser controller can receive control feedback associated with each individual laser damage detection mechanism. In other embodiments, multiple laser damage detection mechanisms can be coupled together, such as in series, and the laser controller can receive control feedback associated with the group of laser damage detection mechanisms. Again, in particular embodiments, each laser damage detection mechanism can include a bypass mechanism that allows current to flow through a laser damage detection mechanism even when at least one conductive trace of the laser damage detection mechanism has been interrupted. This allows the LED or other feedback device of the damaged detection mechanism to stop working while allowing the current to flow through the other laser damage detection mechanisms. In some embodiments, this also allows the current flowing through the entire collection of laser damage detection mechanisms to be sensed or measured, which allows the laser controller to detect damage to one or more of the laser damage detection mechanisms 210 based on changes in the current.

The burn-through detector may be configured to work at a test power level, intermediate ramp power levels, and at full power. The dynamic range of the photodiode is set by either the input power or the resistive load in the readout electronics. In one embodiment, the burn-through detector may be configured with multiple optical attenuators to allow for input power variation. In a certain embodiment, the burn-through detector may be configured with 16 bit photodiode output having sufficient depth/dynamic range without attenuation.

The auto-alignment system propagates laser(s) into a beam path off the primary mirror for the purpose of sensing as many optics as possible in the beam path. The laser(s) is sensed at the SWIR detector(s) to provide structurally induced line of sight (SILOS) jitter correction beam (to provide near/far field beam sensing) while providing an additional reference beam to the HEL subsystem or additional steering/alignment capabilities.

The laser auto-alignment path and components have the capability to sense the HEL beam walk in the system at the primary mirror though the same auto-alignment fiber, and to position burn-through detector(s) to both provide footprint coverage for all beam walk possibilities and information on primary mirror modes for SILOS correction.

Architecture allows for either electronic (gain) or optical attenuation to allow for multiple power input values.

As mentioned herein examples of packaging of the system may include a spherical casing, with a mount. There are many potential installations of the packaging. For example, one installation may include mounting the casing on a helicopter. Another installation may include mounting the casing on a stationary installation. Another installation may include mounting the casing in a land vehicle. Many other installations/mountings are possible, for example on buildings or other stationary structures, on land vehicles of various types, on water vehicles of different types, and on aerospace vehicles (air or space) of many sorts.

In one embodiment, the system is used in the field of directed-energy weapons, such as those involving high-energy lasers. However, other applications are contemplated.

In some embodiments, the system can be used in a number of commercial and defense-related applications. For example, the HEL can find use in commercial mining applications, such as in drilling, mining, or coring operations. For instance, the HEL can be used to soften or weaken an earth bed prior to drilling through the earth bed using drill bits. This can allow for fewer drill bit changes and extended lifetimes and reliabilities of the drill bits. Here, free-space propagation of the HEL beam from the output window of the HEL may be used, allowing deeper penetration at further distances compared to conventional fiber lasers.

In some embodiments, the HEL can also find use in remote laser welding, cutting, drilling, or heat treating operations, such as in industrial or other automation settings. The use of a high-power and high-beam quality system allows the processing of thicker materials to occur at larger working distances from the system while minimizing the heat-affected zone and maintaining vertical or other cut lines. Among other things, this helps to support welding or cutting operations where proximity to the weld or cut site is difficult or hazardous. It also helps to protect the system and possibly any human operators from smoke, debris, or other harmful materials.

In some embodiments, the high-energy laser can further find use in construction and demolition operations. Example operations can include metal resurfacing or de-slagging, paint removal, and industrial demolition operations. The HEL can be used to ablate material much faster and safer compared to conventional operations. As a particular example of this functionality, the HEL can be used to support demolition of nuclear reactors or other hazardous structures. The HEL can be used to cut through contaminated structures like contaminated concrete or nuclear containment vessels or reactors from long distances. This helps to avoid the use of water jet cutting or other techniques that create hazardous waste, such as contaminated water. It also provides improved safety since human operators can remain farther away from contaminated structures being demolished.

A number of additional applications are possible. For example, the HEL can find use in power beaming applications, where high-power laser beams are targeted to photovoltaic (solar) cells of remote devices to be recharged. The HEL can also find use in hazardous material (HAZMAT) applications, where the laser is used to heat and decompose hazardous materials into less harmful or non-harmful materials. Note that all of the above applications are for illustration only and do not limit this disclosure to any particular applications of the system.

Various controllers, such as the controller described above, may execute various operations discussed above. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the invention. Accordingly, the foregoing description and drawings are by way of example only, and the scope of the invention should be determined from proper construction of the appended claims, and their equivalents.

Aspects of the present disclosure are set out in the following numbered clauses:
Clause 1. A beam director system comprising:
   a high-energy laser (HEL) beam source for an HEL beam;
   a primary mirror disposed along an optical path downstream of the HEL beam source;
   output optics downstream of the primary mirror;
   an auto-alignment system associated with the HEL beam source;
   a jitter correction system downstream of the HEL beam source and upstream of the primary mirror; and
   a burn-through detector associated with the primary mirror.
Clause 2 The beam director system of clause 1, wherein the HEL beam source includes an auto-alignment laser, a VIS-NIR fiber circulator, and a reflective collimator.
Clause 3. The beam director system of clause 1, wherein the jitter correction system is positioned adjacent to a high-speed short wave infrared sensor.
Clause 4. The beam director system of clause 3, wherein the jitter correction system includes a far field position sensitive detector and a near field sensing array.
Clause 5. The beam director system of clause 1, wherein the burn-through detector is disposed along a burn-through path.
Clause 6. The beam director system of clause 5, wherein the burn-through path includes at least one attenuator and a photo diode.
Clause 7. The beam director system of clause 6, wherein the burn-through detector is configured to work at a test power level, intermediate ramp power levels, and at full power.
Clause 8. The beam director system of clause 6, wherein a dynamic range of the photodiode is set by either the input power or the resistive load in the readout electronics.
Clause 9. The beam director system of clause 6, wherein the burn-through detector is configured with a bit depth photodiode output having sufficient depth/dynamic range without attenuation.
Clause 10. The beam director system of clause 5, wherein the burn-through detector includes one or more burn strips surrounding a periphery of the primary mirror.
Clause 11. The beam director system of clause 1, wherein the HEL beam source also emits an auto-alignment beam that is co-aligned with the HEL beam.
Clause 12. The beam director system of clause 10, further comprising a beamsplitter configured to direct light to the jitter correction system and a retroreflector associated with the primary mirror, the retroreflector directing part of the auto-alignment back to one or more track sensors.
Clause 13. The beam director system of clause 1, further comprising a beam correction system, a beam pickoff system, a high-speed track sensor, a beam correction sensor, and/or a high-speed track correction system.
Clause 14. A method of operating a high-energy laser (HEL) weapon, the method comprising:
   sending an HEL beam of the HEL weapon through optics that are optically downstream of an HEL beam source of the HEL weapon; and
   correcting the path of the HEL beam that has passed through the optics, using an auto-alignment system associated with the HEL beam source, a jitter correction system downstream of the HEL beam source and upstream of the primary mirror, and a burn-through detector associated with the primary mirror.
Clause 15 The method of clause 14, wherein the burn-through detector is disposed along a burn-through path.
Clause 16. The method of clause 15, wherein the burn-through path includes at least one attenuator and a photo diode.
Clause 17. The method of clause 16, wherein the burn-through detector is configured to work at a test power level, intermediate ramp power levels, and at full power.
Clause 18. The method of clause 16, wherein a dynamic range of the photodiode is set by either the input power or the resistive load in the readout electronics.
Clause 19. The method of clause 16, wherein the burn-through detector is configured with a bit depth photodiode output having sufficient depth/dynamic range without attenuation.
Clause 20. The method of clause 17, wherein correcting the optics includes changing position of one or more fast steering mirrors of one or more beam correction elements.

## Claims

1. A beam director system comprising:
a high-energy laser (HEL) beam source for an HEL beam;
a primary mirror disposed along an optical path downstream of the HEL beam source;
output optics downstream of the primary mirror;
an auto-alignment system associated with the HEL beam source;
a jitter correction system downstream of the HEL beam source and upstream of the primary mirror; and
a burn-through detector associated with the primary mirror.

2. The beam director system of claim 1, wherein the HEL beam source includes an auto-alignment laser, a VIS-NIR fiber circulator, and a reflective collimator.

3. The beam director system of claim 1 or claim 2, wherein the jitter correction system is positioned adjacent to a high-speed short wave infrared sensor; and
preferably, wherein the jitter correction system includes a far field position sensitive detector and a near field sensing array.

4. The beam director system of any preceding claim, wherein the burn-through detector is disposed along a burn-through path.

5. The beam director system of claim 4, wherein the burn-through path includes at least one attenuator and a photo diode.

6. The beam director system of claim 5, wherein the burn-through detector is configured to work at a test power level, intermediate ramp power levels, and at full power.

7. The beam director system of claim 5 or claim 6, wherein a dynamic range of the photodiode is set by either the input power or the resistive load in the readout electronics; and/or
wherein the burn-through detector is configured with a bit depth photodiode output having sufficient depth/dynamic range without attenuation.

8. The beam director system of claim 4, wherein the burn-through detector includes one or more burn strips surrounding a periphery of the primary mirror; and
preferably, further comprising a beamsplitter configured to direct light to the jitter correction system and a retroreflector associated with the primary mirror, the retroreflector directing part of the auto-alignment back to one or more track sensors.

9. The beam director system of any preceding claim, wherein the HEL beam source also emits an auto-alignment beam that is co-aligned with the HEL beam.

10. The beam director system of any preceding claim, further comprising a beam correction system, a beam pickoff system, a high-speed track sensor, a beam correction sensor, and/or a high-speed track correction system.

11. A method of operating a high-energy laser (HEL) weapon, the method comprising:
sending an HEL beam of the HEL weapon through optics that are optically downstream of an HEL beam source of the HEL weapon; and
correcting the path of the HEL beam that has passed through the optics, using an auto-alignment system associated with the HEL beam source, a jitter correction system downstream of the HEL beam source and upstream of the primary mirror, and a burn-through detector associated with the primary mirror.

12. The method of claim 11, wherein the burn-through detector is disposed along a burn-through path.

13. The method of claim 12, wherein the burn-through path includes at least one attenuator and a photo diode.

14. The method of claim 13, wherein the burn-through detector is configured to work at a test power level, intermediate ramp power levels, and at full power; and
preferably, wherein correcting the optics includes changing position of one or more fast steering mirrors of one or more beam correction elements

15. The method of claim 13, wherein a dynamic range of the photodiode is set by either the input power or the resistive load in the readout electronics; and/or
wherein the burn-through detector is configured with a bit depth photodiode output having sufficient depth/dynamic range without attenuation.
